# EUROPÄISCHE PATENTSCHRIFT

(11) **EP 1 362 221 B1**
(45) Veröffentlichungstag und Bekanntmachung des Hinweises auf die Patenterteilung: **19.05.2004**
(21) Anmeldenummer: 01925439.0
(22) Anmeldetag: 13.03.2001
(51) Int. Cl.: G01D 5/14

(54) **DREHWINKELSENSOR**
ROTATION ANGLE SENSOR
CAPTEUR D'ANGLE DE ROTATION

(30) Priorität: 22.02.2001 DE 10108566
(43) Veröffentlichungstag der Anmeldung: 19.11.2003
(73) Patentinhaber: Fraunhofer-Gesellschaft zur Förderung der angewandten Forschung e.V., 80686 München (DE)
(72) Erfinder: GRÜGER, Heinrich, 01109 Dresden (DE); GOTTFRIED-GOTTFRIED, Ralf, 44289 Dortmund (DE)
(74) Vertreter: Zimmermann, Tankred Klaus
(86) Internationale Anmeldenummer: PCT/EP2001/002830
(87) Internationale Veröffentlichungsnummer: WO 2002/068911

(56) Entgegenhaltungen:
- EP-A- 0 591 113
- EP-A- 0 723 136
- WO-A-96/10731
- US-A- 3 838 263
- US-A- 4 764 767

## Beschreibung

Die vorliegende Erfindung bezieht sich auf die Erfassung von Drehwinkeln, wie z. B. den Drehwinkel einer Drosselklappe eines Drosselventils. Insbesondere bezieht sich die vorliegende Erfindung auf Vorrichtungen bzw. Sensoren zum Erfassen von Drehwinkeln, die auf analoger, magnetischer Basis arbeiten.

An vielen Stellen wird heutzutage die Orientierung eines drehbaren Teils als Absolutwert, bzw. der Drehwinkel den das drehbare Teil mit einem festen Bezugspunkt einschließt, für eine weitere Verarbeitung benötigt, wie z. B. eine Rückkopplungssteuerung oder dergleichen. Solche drehbaren Teile umfassen sowohl frei drehbare Teile, wie z. B. Achsen und Wellen von Antrieben, als auch Teile, die nur in einem Teilbereich des Vollkreises, d. h. um weniger als 360°, drehbar sind, wie z. B. Drehregler oder Drosselklappenventile. Zur Messung des Drehwinkels sind derzeit verschiedene Sensorsysteme bzw. -anordnungen bekannt, die sich sowohl in Bezug auf ihre Genauigkeit, ihre Zuverlässigkeit als auch die Herstellungskosten unterscheiden. Diese Sensortypen lassen sich grundsätzlich in zwei verschiedene Typen einteilen, nämlich einerseits die berührenden Systeme und andererseits die berührungslosen Systeme.

Die berührenden Systemen beruhen zumeist auf einer potentiometrischen Messung und zeichnen sich aufgrund ihres einfachen Aufbaus durch sehr niedrige Herstellungskosten aus. Ein großer Nachteil der berührenden Systeme besteht jedoch darin, dass sich bei diesen Systemen hohe Temperaturdriften ergeben, und dass bei Auftreten von Schwingungen und Vibrationen, wie z. B. bei einem Ventil in einem Kraftfahrzeug, sogar bei einer festen Drehstellung des Messsystems kleine Bewegungen hoher Frequenzen auftreten können, die zu einem hohen Verschleiß und einem vorzeitigen Ausfall des Systems führen.

Die berührungslosen Systeme lassen sich wiederum in solche des analogen und des digitalen Typs unterscheiden. Bei den berührungslosen Systemen des digitalen Typs ist ein aufwändiger Geber erforderlich, der den gewünschten Kreisbereich, d. h. den Bereich von möglichen Drehwinkeln, logisch in mehrere Teilsegmente unterteilt. Eine bekannte Möglichkeit umfasst beispielsweise eine Geberstruktur in Form eines Zahn- oder Wellenrades, dem an einer Stelle ein Zahn fehlt. Sowohl die "Fehlstelle" als auch die vorhandenen Zähne können durch eine geeignete Sensorik, die auf optischer oder magnetischer Basis arbeitet, erfasst werden, wobei durch Zählen der auf die Fehlstelle folgenden Zähne eine Winkelposition erfasst werden kann. Obwohl hierzu lediglich ein Geber und ein Sensor erforderlich sind, besteht ein Nachteil dieser Lösung darin, dass die Winkelbestimmung erst nach dem ersten Durchgang bzw. dem erstmaligen Erfassen der besonders ausgezeichneten Stelle, d. h. des fehlenden Zahnes, erfolgen kann.

Eine weitere bekannte Realisierung eines berührungslosen Systems eines digitalen Typs umfasst einen aufwändigen, aus mehreren Geberteilen bestehenden Geber sowie je einen Sensor pro Geberteil. Jeder Geberteil unterteilt den gewünschten Kreisbereich, d. h. den Bereich von möglichen Drehwinkeln, in verschiedene Teilsegmente. Die Erfassung der Teilsegmente durch die Sensoren kann beispielsweise über Schlitzbleche optisch oder magnetisch durchgeführt werden. Bei geeigneter Unterteilung des gewünschten Kreisbereiches, beispielsweise durch Halbieren, Vierteln usw. desselben, kann erzielt werden, dass die Ausgangssignale von allen Sensoren zusammen den Wert des Drehwinkels in digital codierter Form mit einer Auflösung von 1 Bit pro Sensor/Geber-Paar angeben. Für eine Auflösung von ca. 1° müssen neun Bit (512 Möglichkeiten) codiert werden, und folglich sind hierzu neun Geberbauteile und neun Sensoren erforderlich. Das Signal steht aufgrund der geeigneten Unterteilung in Teilsegmente folglich ohne weitere Wandlung digital zur Verfügung. Ein Nachteil dieser Lösungen besteht jedoch darin, dass eine Erhöhung der Auflösung nur durch Hinzufügen weiterer Geberbauteile und Sensoren durchgeführt werden kann. Je höher die zu erzielende Auflösung ist, desto komplizierter wird der dafür erforderliche Geber.

Berührungslose analoge Systeme arbeiten herkömmlicherweise mit einem einfachen Magneten als Geber und zwei unter 90° zueinander angeordneten analogen Magnetfeldsensoren. Typischerweise werden magnetoresistive- (MR-) oder Hallsensoren verwendet. Der Gebermagnet wird so angeordnet, dass seine Nord/Süd-Achse in radialer Richtung verläuft, so dass die Magnetfeldsensoren Signale eines sinus- bzw. cosinusförmigen Verlaufs ausgeben, aus denen der momentane Drehwinkel berechnet werden kann. Die Auflösung wird hierbei von der Genauigkeit der Magnetfeldsensoren, den Umgebungseinflüssen und der Wandlungstiefe der anschließenden Analog/Digital-Umsetzung bestimmt. Bedingt durch die Anordnung von zwei Sensoren unter exakt 90° ist ein hoher Aufwand für die Realisierung notwendig, wodurch diese Lösung relativ kostenintensiv ist.

Aufgrund der technischen Gegebenheiten sind in vielen Anwendungsgebieten oftmals berührungslose Messungen notwendig oder von erheblichem Vorteil. Auf der anderen Seite sind diese berührungslosen Messungen aufwändiger und damit teurer. Für Anwendungen mit extrem hohen Stückzahlen spielen deshalb die Herstellungskosten für einen Drehwinkelsensor eine sehr wichtige Rolle. Es besteht folglich ein Bedarf nach einem unaufwändigeren berührungslos messenden Drehwinkelsensor.

Aus der DE 3244891 C1 ist ein System für die Erfassung von Positionen bei linearen Bewegungen bekannt, bei dem ein einfacher, in Richtung der linearen Bewegung ausgerichteter Magnet, und eine Reihe von äquidistant und parallel zu der linearen Bewegung angeordneten Sensoren, die zusammen einen Maßstab definieren, verwendet werden. Die in Reihe angeordneten Sensoren erfassen das Magnetfeld, wobei aus der Messung der Nulldurchgang der senkrechten Feldkomponente bestimmt wird, der sich an einer Mittelebene durch den Magneten ergibt, wobei der Ort des Nulldurchgangs den Ort des Magneten angibt.

Die Aufgabe der vorliegenden Erfindung besteht darin, eine Vorrichtung zum Erfassen eines Drehwinkels einer Drehung um eine Drehachse zu schaffen, der bei vergleichbaren Messeigenschaften unaufwändiger ist.

Diese Aufgabe wird durch eine Vorrichtung gemäß Anspruch 1 gelöst.

Der vorliegenden Erfindung liegt die Erkenntnis zugrunde, dass die Anfälligkeit der potentiometrischen Systeme, die Aufwendigkeit der berührungslosen Systeme des digitalen Typs in Hinblick auf die Geberstruktur und der Analog/Digital-Umsetzungsaufwand bei den analogen Sinus/Cosinus-Signal-Systemen dadurch beseitigt werden können, dass ein Gebermagnet und ein durch eine Mehrzahl von magnetfeldempfindlichen Sensorelementen definierter Maßstab derart zueinander angeordnet werden, dass das erzeugte Magnetfeld an einem Ort auf dem Maßstab eine Charakteristik aufweist, und der Ort auf dem Maßstab zumindest für einen Teilbereich einer vollen Drehung in eindeutiger Weise von dem Drehwinkel abhängt. Auf diese Weise wird es ermöglicht, einerseits eine einfache Geberstruktur zu verwenden, wie es beispielsweise bei den Sinus/Cosinus-Signal-Systemen der Fall ist, und andererseits die Drehwinkelposition aus den gemessenen Magnetfelddaten auf eine Weise bestimmen zu können, die einerseits unaufwändig ist und andererseits an die gewünschte Auflösung anpassbar ist. Im Gegensatz zu den im vorhergehenden erwähnten berührungslosen Systemen des analogen Typs benötigt ein erfindungsgemäßer Sensor bzw. eine erfindungsgemäße Vorrichtung beispielsweise keine aufwändigen Sinus- und Cosinus-Multiplizierer zur Auswertung, während zur gleichen Zeit im Vergleich zu den berührungslosen Systemen des digitalen Typs die Geberstruktur deutlich einfacher sein kann.

Der Gebermagnet und die Mehrzahl von magnetfeldempfindlichen Sensorelementen können derart angeordnet sein, dass bei Drehung um die Drehachse die Mehrzahl von magnetfeldempfindlichen Sensorelementen relativ zu dem Gebermagnet um denselben kreist. Anders ausgedrückt, ist entweder der Gebermagnet ortsfest angeordnet und die Mehrzahl von Sensorelementen an der Drehachse angebracht, oder der Gebermagnet ist an der Drehachse angebracht, und die Mehrzahl von Sensorelementen ist ortsfest angeordnet, so dass bei einer Drehung um die Drehachse entweder die Mehrzahl von Sensorelementen um den Gebermagnet kreist, oder sich der Gebermagnet um die Drehachse dreht, während die Mehrzahl von Sensorelementen fest angeordnet ist.

Bei einem Ausführungsbeispiel ist der Gebermagnet schräg zur Drehachse magnetisiert. Auf diese Weise erzeugt der Gebermagnet ein Magnetfeld, das eine Charakteristik aufweist, die den durch die Mehrzahl von Sensorelementen definierten Maßstab an einem Ort schneidet, der bei Drehungen innerhalb zumindest eines Teilbereiches des Vollkreises in eindeutiger Weise von dem Drehwinkel abhängt. Bei einem speziellen Ausführungsbeispiel umfasst der Drehwinkelbereich, für den der Ort in eindeutiger Weise von dem Drehwinkel abhängt, beispielsweise einen Bereich von 180° oder 90°.

Ein eindeutiger Zusammenhang zwischen dem Ort und dem Drehwinkel im Vollkreis bzw. innerhalb eines Drehwinkelbereichs, der 360° überspannt, kann, falls dies nicht bereits allein durch das erzeugte Magnetfeld der Fall ist, beispielsweise dadurch erzielt werden, dass ein weiteres Signal erzeugt wird, das einen Drehwinkelteilbereich einer Mehrzahl von Drehwinkelteilbereichen angibt, in dem sich der Drehwinkel augenblicklich befindet, oder das anders ausgedrückt den Drehwinkelbereich in eine Mehrzahl von Drehwinkelteilbereiche unterteilt. Durch Empfangen des den Drehwinkelteilbereich angebenden Signals kann aus einer Kombination dieses Signals und des Orts auf dem Maßstab innerhalb des gesamten Vollkreises in eindeutiger Weise auf den Drehwinkel rückgeschlossen werden.

Eine weitere Möglichkeit zur Erweiterung des Drehwinkelbereiches mit eindeutiger Zuordnung zwischen Drehwinkel und Ort der Magnetfeldcharakteristik besteht darin, die Mehrzahl von Sensorelementen zu duplizieren, so dass eine zweite, funktionsgleiche Mehrzahl von Sensorelementen durch eine Rotation um die Drehachse relativ zu der ersten Mehrzahl von Sensorelementen versetzt angeordnet ist. In diesem Fall hängt eine Kombination der Orte auf dem ersten Maßstab und einem durch die zweite Mehrzahl von Sensorelementen definierten zweiten Maßstab, an denen das erzeugte Magnetfeld die Charakteristik aufweist, innerhalb des gesamten Vollkreises in eindeutiger Weise von dem Drehwinkel ab.

Die Sensorelemente können auf einer zu der Drehachse beabstandeten und zu derselben parallelen Ebene angeordnet sein, so dass eine Integration der Sensorelemente in einem Chip, wie z. B. in Form von Hallsensoren, möglich ist. Bei einem speziellen Ausführungsbeispiel sind die Sensorelemente in Form eines zweidimensionalen oder eindimensionalen Arrays angeordnet. Eine bevorzugte Anordnung der Sensorelemente umfasst eine lineare Anordnung derselben parallel zur Drehachse.

Die Charakteristik, die das erzeugte Magnetfeld an dem Ort auf dem durch die Sensorelemente definierten Maßstab aufweist, kann ein Nulldurchgang, ein relatives Minimum oder ein relatives Maximum einer Komponente des Magnetfeldes in einer beliebigen vorbestimmten Richtung oder des Betrags des Magnetfeldes sein. Die Orte, an denen das Magnetfeld die Charakteristik aufweist, bilden eine geometrische Erstreckung, die sich während einer Drehung um die Drehachse relativ zu den Sensorelementen um die Drehachse dreht. Innerhalb eines zu erfassenden Drehwinkelbereiches schneidet die geometrische Erstreckung den durch die Sensorelemente definierten Maßstab an einem bestimmten Ort. Dieser Ort der Magnetfeldcharakteristik auf dem Maßstab hängt innerhalb des zu erfassenden Drehwinkelbereiches in eindeutiger Weise von dem Drehwinkel ab. Der Ort kann aus den Magnetfelddaten der Sensorelemente, beispielsweise mittels Interpolation bestimmt werden, wobei innerhalb des zu erfassenden Drehwinkelbereiches aus dem Ort in eindeutiger Weise auf den Drehwinkel rückgeschlossen werden kann. Gemäß einem speziellen Ausführungsbeispiel ist die vorher erwähnte Charakteristik des Magnetfeldes beispielsweise der Nulldurchgang der radialen Komponente des Magnetfeldes, wobei die Orte, an denen das Magnetfeld diese Charakteristik aufweist, eine zu einer Magnetisierungsrichtung des Gebermagneten im wesentlichen senkrechte Fläche bilden.

Ein erfindungsgemäßer Sensor ist gegenüber herkömmlichen Sensorsystemen insbesondere dahingehend vorteilhaft, dass der Sensorteil in einen einzigen Chip integrierbar ist, der beispielsweise in CMOS-Standardtechnologie hergestellt werden kann, wodurch die Herstellungskosten gering gehalten werden können. Zudem ist der Gebermagnet bedeutend einfacher und preiswerter herzustellen, als dies bei digitalen Winkelgebern der Fall ist. Eine hohe Genauigkeit kann erreicht werden, ohne dass extrem hoch auflösende Analog/Digital-Umsetzer erforderlich sind. Zusätzlich stehen die Orientierungsinformationen bzw. der erfasste Drehwinkel unmittelbar, wie z. B. unmittelbar nach dem Einschalten des Sensors, zur Verfügung, anders als dies bei dem im vorhergehenden beschriebenen berührungslosen Sensorsystem des digitalen Typs mit dem fehlenden Zahnradzahn der Fall ist.

Bevorzugte Ausführungsbeispiele der vorliegenden Erfindung werden nachfolgend bezugnehmend auf die beiliegenden Zeichnungen näher erläutert. Es zeigen:
- Fig. 1: eine perspektivische Ansicht eines speziellen Ausführungsbeispiels eines Drehwinkelsensors gemäß der vorliegenden Erfindung;
- Fig. 2: eine Projektionsansicht des Gebermagneten des Sensors von Fig. 1 aus einer Blickrichtung, wie sie durch die Markierungen A-A in Fig. 1 angezeigt wird, und die senkrecht zur Magnetisierungsrichtung des Gebermagneten verläuft;
- Fig. 3a: einen Graph, der die Abhängigkeit des Orts des Nulldurchgangs der radialen Komponente des Magnetfeldes auf dem durch die Sensorelemente definierten Maßstab in Abhängigkeit von dem Drehwinkel ϕ bei dem Sensor von Fig. 1 zeigt;
- Fig. 3b: ein Graph, der den Verlauf der radialen Magnetfeldstärke entlang des durch die Sensorelemente gebildeten Maßstabs in der in Fig.1 gezeigten Drehstellung darstellt; und
- Fig. 4: ein Drosselklappenventil, bei dem der Sensor von Fig. 1 verwendet wird.

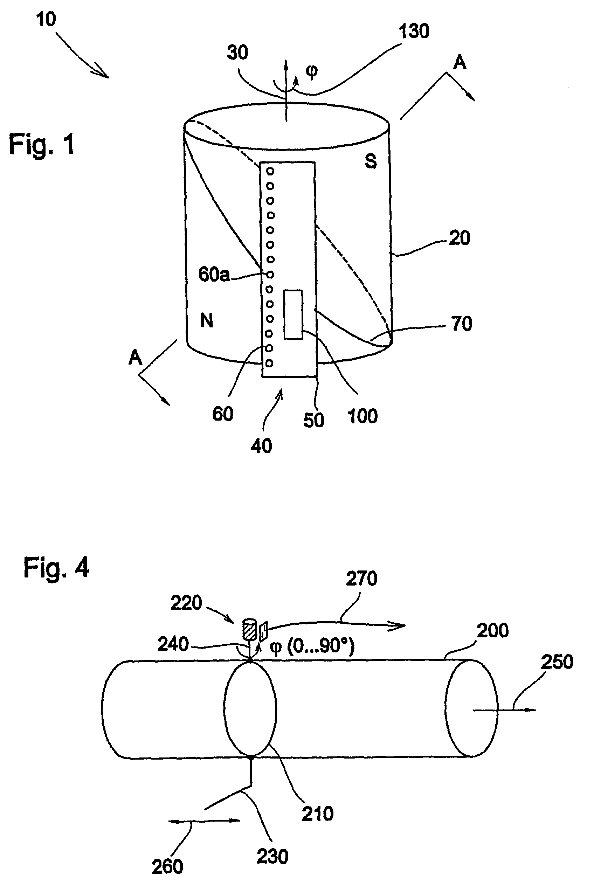

Es wird zunächst auf Fig. 1 Bezug genommen, die ein spezielles Ausführungsbeispiel für einen Drehwinkelsensor gemäß der vorliegenden Erfindung zeigt. Der Drehwinkelsensor, der allgemein mit 10 angezeigt ist, umfasst einen Gebermagnet 20, der fest an einer Drehachse 30 angebracht ist, sowie eine ortsfest angeordnete Detektoranordnung 40, die aus einem planaren Trägersubstrat 50 und darauf angeordneten magnetfeldempfindlichen Sensorelementen 60 besteht, und die als Bezugspunkt zur Bestimmung des Drehwinkels ϕ der Drehachse 30 dient.

Der Gebermagnet 20 ist zylindrisch geformt und ist mit seiner Symmetrieachse, die mit der Drehachse 30 zusammenfällt, an der Drehachse 30 befestigt. Der Gebermagnet 20 ist, wie es in Fig. 1 mit "S" für den magnetischen Südpol und "N" für den magnetischen Nordpol gezeigt ist, entlang seiner Flächendiagonalen bzw. entlang einer Diagonalen einer Rotationsfläche, die in Fig. 1 parallel zur Zeichenebene verläuft, magnetisiert, wobei zwischen der Magnetisierungsrichtung und dem Bezugspunkt der Detektoranordnung 40 der Drehwinkel ϕ eingeschlossen wird.

Bei einem besonders bevorzugten Ausführungsbeispiel, wie es in Fig. 1 gezeigt ist, sind die Höhen des zylinderförmigen Gebermagneten 20 und der Durchmesser desselben gleich gewählt. Durch Wahl der Abmessungen des Gebermagneten 20 auf diese Art und Weise wird eine hohe Symmetrie und ein besonders gleichmäßiger Ebenenverlauf definiert, entlang dessen die radiale Komponente des von dem Gebermagneten 20 erzeugten Magnetfelds Null beträgt und einen Nulldurchgang aufweist. Die Schnittlinie des Außenmantels des zylindrischen Gebermagneten 20 mit der Ebene, an der das radiale Magnetfeld Null ist, ist in Fig. 1 mit 70 dargestellt.

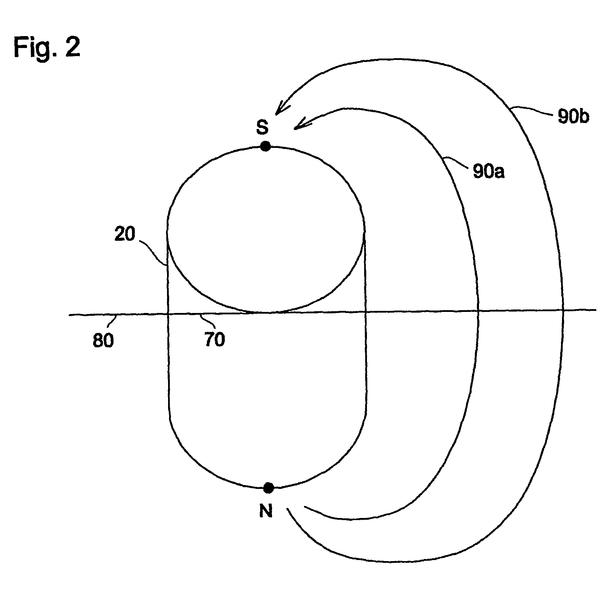

Um das Zustandekommen der Schnittlinie 70 zu veranschaulichen ist in Fig. 2 eine Projektionsansicht des Gebermagneten 20 aus einer mit A-A gezeigten Blickrichtung angezeigt. In Fig. 2 verläuft die Magnetisierungsrichtung des Gebermagneten 20 parallel zur Projektions- bzw. Zeichenebene. Eine Linie 80 zeigt die Ebene an, in der die radiale Komponente des von dem Gebermagneten 20 erzeugten Magnetfeldes Null beträgt. Mit 90a und 90b sind exemplarisch zwei Magnetfeldlinien des von dem Gebermagneten 20 erzeugten Magnetfeldes gezeigt, die, wie es in Fig. 2 ersichtlich ist, die Ebene 80 senkrecht schneiden, weshalb folglich an den Schnittpunkten der Magnetfeldlinie 90a und 90b mit der Ebene 80 die radiale Komponente des Magnetfeldes Null beträgt.

Wieder bezugnehmend auf Fig. 1 ist das Trägersubstrat 50 beabstandet zu dem Gebermagneten 20 und zu der Drehachse 30 und parallel zu denselben ortsfest angeordnet, wobei die magnetfeldempfindlichen Sensorelemente 60 auf dem Trägersubstrat 50 linear angeordnet sind, um sich parallel zu der Drehachse 30 zu erstrecken, und derart ausgerichtet sind, um die radiale Komponente des erzeugten Magnetfeldes zu erfassen. Die magnetfeldempfindlichen Sensorelemente sind zudem in festgelegten Abständen zueinander angeordnet, um einen Maßstab zu definieren, der durch dieselben und parallel zur Drehachse 30 verläuft. Bei dem in Fig. 1 gezeigten Ausführungsbeispiel sind die Sensorelemente 60 äquidistant angeordnet.

Die Detektoranordnung 40 ist bei einem bevorzugten Ausführungsbeispiel in einen einzigen Chip integriert, der als die magnetfeldempfindlichen Sensorelemente 60 Hallsensoren umfasst, und in den zusätzlich eine Auswerteschaltung 100 integriert sein kann, die die im folgenden erläuterte Auswertung der Sensorsignale der Sensorelemente durchführt.

Bei einer Realisierung des in Fig. 1 gezeigten Sensors sind in dem Chip 50 als magnetfeldempfindliche Sensorelemente 32 Hallsensoren in einer linearen Anordnung angeordnet, wobei dieselben mit einem Abstand von 151,2 µm untereinander auf dem Halbleiterchip integriert sind, und wobei der Chip derart bezüglich der Drehachse positioniert sind, dass die Hallsensoren das Radialfeld des von dem Gebermagneten bezüglich der Drehachse messen und die Reihe der Hallsensoren entlang der Achse verläuft. Bei dieser Realisierung beträgt der Durchmesser des Gebermagneten 4 mm und die Höhe desselben ebenfalls 4 mm.

Nachdem im vorhergehenden der Aufbau des Sensors von Fig. 1 beschrieben worden ist, wird im folgenden die Funktionsweise desselben beschrieben, wobei zunächst erläutert wird, wie aus den Messwerten der Sensorelemente der Detektoranordnung der Ort des radialen Nullfelddurchgangs bestimmt werden kann.

Wie es in Fig. 1 gezeigt ist, befindet sich die Detektoranordnung 40 in der Nähe des Gebermagneten 20. Wie es ebenfalls ersichtlich ist, verläuft die Ebene des radialen Nullfelddurchgangs des durch den Gebermagneten 20 erzeugten Magnetfeldes, die den Außenmantel des Gebermagneten 20 an der Schnittlinie 70 schneidet, in der in Fig. 1 gezeigten Drehwinkelstellung ϕ schräg zum Maßstab durch ein Sensorelement 60a. Folglich beträgt das von dem Sensorelement 60a erfasste radiale Magnetfeld Null. Zudem erfassen die über dem Sensorelement 60 angeordneten Sensorelemente ein radiales Magnetfeld, das zu demjenigen, das von den Sensorelementen, die unterhalb des Sensorelementes 60a angeordnet sind, entgegengesetzt ist.

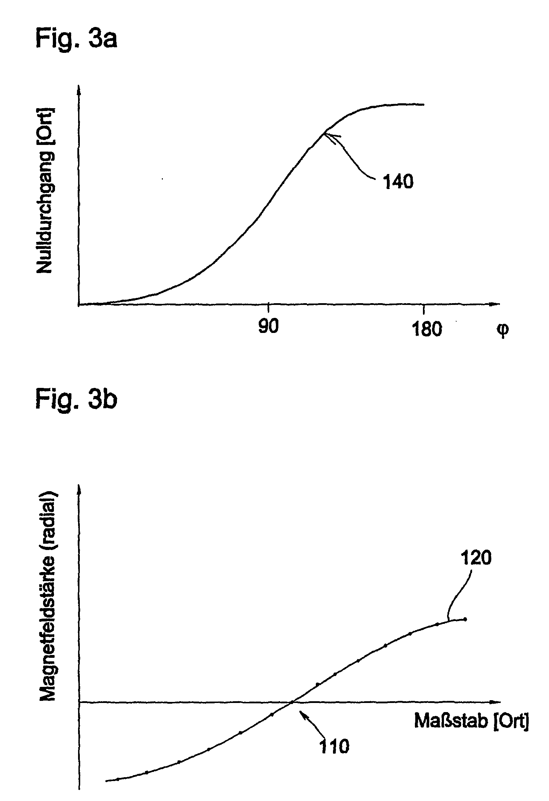

Dieser Sachverhalt ist in Fig. 3b dargestellt. Fig. 3b zeigt einen Graphen, bei dem die x-Achse dem durch die Sensorelemente 60 (Fig. 1) definierten Maßstab entspricht, und entlang der y-Achse die radiale Magnetfeldstärke in willkürlichen Einheiten aufgetragen ist. Die Messpunkte stellen die von den Sensorelementen erfasste Magnetfeldstärke in radialer Richtung dar. Der Messwert bzw. Messpunkt 110 ist beispielsweise der von dem Sensorelement 60a (Fig. 1) erfasste Messwert für die radiale Magnetfeldstärke, die, wie bereits erwähnt, bei dem Sensorelement 60a in der in Fig. 1 gezeigten Drehwinkelstellung des Gebermagneten Null beträgt. Zudem weist die radiale Komponente des erzeugten Magnetfeldes bei den benachbart zu dem Sensorelement 60a weiter oben und weiter unten angeordneten Sensorelementen eine entgegengesetzte Richtung bzw. ein unterschiedliches Vorzeichen auf. In dem vorliegenden Fall entspricht der Ort des radialen Nullfelddurchgangs dem Ort des Sensorelements 60a auf dem Maßstab.

In dem allgemeinen Fall, dass der Nulldurchgang der radialen Magnetfeldstärke nicht mit dem Ort eines magnetfeldempfindlichen Sensorelementes zusammenfällt, kann der Ort des Nulldurchganges entlang des durch die Sensorelemente definierten Maßstabs beispielsweise mittels einer Interpolation ermittelt werden, wobei der Nulldurchgang der sich ergebenden Interpolationskurve den Ort des Nulldurchgangs des radialen Magnetfeldes auf dem Maßstab angibt. Die Kurve 120 stellt beispielsweise eine Least-Square-Anpassung, d. h. eine Anpassung der kleinsten Fehlerquadrate, unter Verwendung eines Polynoms vorbestimmter Ordnung dar, die unter Verwendung aller Messwerte erhalten wird. Die Interpolation kann jedoch auch auf andere Weise durchgeführt werden, wie z. B. durch abschnittsweise Polynominterpolation, wie z. B. eine abschnittsweise lineare Interpolation. Mittels der Interpolation kann der Nulldurchgangsort,mit viel höherer Genauigkeit bestimmt werden als der Abstand zwischen den magnetfeldempfindlichen Sensorelementen.

Zu näheren Details hinsichtlich der Interpolation und der Realisierung derselben zur Bestimmung des Orts des Nulldurchgangs des radialen Magnetfeldes auf dem Maßstab wird auf das Dokument DE 3244891 C2, das hiermit unter Bezugnahme aufgenommen wird, und auf das Insafa System der Fraunhofer Gesellschaft verwiesen. Der Ort des Nulldurchganges könnte jedoch auch durch andere Verfahren ermittelt werden, wie z. B. durch ein neuronales Netz, das als Eingangswerte alle oder einen Teil der Messwerte verwendet.

Aus dem bestimmten Ort entlang des Maßstabs kann, wie es im folgenden erläutert wird, auf den Drehwinkel rückgeschlossen werden. Hierzu wird zunächst auf Fig. 1 Bezug genommen. Bei einer Drehung der Gebermagneten 20 dreht sich zusammen mit Gebermagneten 20 das von demselben erzeugte Magnetfeld sowie die Ebene, auf der die radiale Komponente des Magnetfeldes Null beträgt, und die durch die Schnittlinie 70 veranschaulicht ist. In dem Fall, dass eine Drehung des Gebermagneten 20 um die Drehachse 30 in der durch den Pfeil 130 von Fig. 1 angezeigten Richtung stattfindet, verschiebt sich der Ort des Nulldurchganges entlang des Maßstabs in axialer Richtung nach oben. In dem Fall einer umgekehrten Drehung verschiebt sich der Ort des Nulldurchgangs auf dem Maßstab, der durch die Sensorelemente definiert wird, umgekehrt in axialer Richtung nach unten. Aus der resultierenden Verschiebung des Orts des Nulldurchgangs entlang und auf dem Maßstab ergibt sich eine Veränderung der von den Sensorelementen erfassten Magnetfeldstärken in radialer Richtung, aus der wie nachfolgend beschrieben der Drehwinkel berechnet werden kann.

Fig. 3a zeigt einen Graphen, bei dem auf der x-Achse der Drehwinkel ϕ und auf der y-Achse der Ort des Nulldurchgangs auf dem Maßstab in willkürlichen Einheiten aufgetragen ist. Dem in Fig. 1 gezeigten Drehwinkel ist in Fig. 3b willkürlich der Drehwinkel 90° zugewiesen worden. Wie es in Fig. 3a ersichtlich ist, ergibt sich bei Drehung des Gebermagneten 20 um die Drehachse 30 (Fig. 1) der mit 140 angezeigte Verlauf des Orts des Nulldurchgangs des radialen Magnetfeldes entlang des durch die Sensorelemente definierten Maßstabs. Der Verlauf 140 stellt folglich den Zusammenhang zwischen dem bestimmten Ort auf dem Maßstab und dem Drehwinkel dar. Wie es ebenfalls ersichtlich ist, ist der Verlauf 140 in dem Bereich von 0 bis 180° streng monoton, was bedeutet, dass der Ort des Nulldurchgangs der radialen Komponente des durch den Gebermagneten erzeugten Magnetfeldes in eindeutiger Weise von dem Drehwinkel ϕ abhängt. Folglich kann nach Bestimmung des Orts des Nulldurchganges auf dem Maßstab unter Verwendung des Verlaufes 140 auf den Drehwinkel ϕ rückgeschlossen werden. Falls der in Fig. 3b gezeigte Verlaufes beispielsweise in analytischer Form vorliegt, kann der Drehwinkel aus dem bestimmten Ort auf dem Maßstab beispielsweise durch Berechnung ermittelt werden. Falls der Verlauf 140 in abgetasteter und gespeicherter Form in einer Nachschlagtabelle vorliegt, kann der Drehwinkel durch Quantisieren des erfassten Orts auf dem Maßstab und anschließendes Nachschlagen mit dem quantisierten Wert als Index ermittelt werden.

Die in Bezug auf Fig. 3b erläuterte Bestimmung des Ortes des Nulldurchganges auf dem durch die Sensorelemente definierten Maßstab und der bezugnehmend auf Fig. 3a beschriebene Rückschluss auf den Drehwinkel ϕ unter Verwendung des bestimmten Ortes können beispielsweise in Hardware implementiert sein, und sind vorzugsweise in der Auswerteschaltung 100 (Fig. 1) integriert, so dass auf einem einzigen Chip 50 sowohl die Sensorelemente als auch die Auswerteschaltung integriert sind. Bei einem bevorzugten Ausführungsbeispiel ist der Chip 50 in CMOS-Standardtechnologie hergestellt, wobei in denselben Hallsensoren als magnetfeldempfindliche Sensorelemente und die Auswerteschaltung 100 integriert sind.

Wie es bezugnehmend auf Fig. 3a beschrieben worden ist, kann anhand des bekannten Verlaufs des Orts des Nulldurchgangs der radialen Komponente des Magnetfeldes in Abhängigkeit von dem absoluten Drehwinkel der Drehwinkel zumindest für einen Drehwinkelbereich von 0 bis 180° eindeutig aus dem ermittelten Ort auf dem Maßstab bestimmt werden. Für eine eindeutige Bestimmung des Drehwinkels aus dem ermittelten Ort auf dem Maßstab über den gesamten Vollkreis hinweg ist jedoch eine zusätzliche Information notwendig, da der in Fig. 3a gezeigte Verlauf sich für den Drehwinkelbereich von 180 bis 360° wiederholt. Die resultierende Mehrdeutigkeit bzw. Zweideutigkeit kann durch eine zusätzliche digitale Codierung bzw. Einteilung der Teilbereiche, wie z. B. durch zusätzliche an der Drehachse angebrachte Magnete, überwunden werden. Ein radial magnetisierter Magnet kann beispielsweise verwendet werden, um ein binäres Signal bzw. Magnetfeld zu erzeugen, das die Bereiche von 0° bis 180° bzw. von 180° bis 360° anzeigt und unterscheidbar macht. Ein alternatives Ausführungsbeispiel zum Überwinden der Mehrdeutigkeit der Abbildung zwischen dem Ort des Nulldurchgangs auf dem Maßstab und dem Drehwinkel sieht anstatt der eindimensionalen Sensorelementanordnung, wie sie in Fig. 1 gezeigt ist, eine zweidimensionale Anordnung der magnetfeldsensitiven bzw. magnetfeldempfindlichen Sensorelemente vor, die über eine zusätzliche analoge Auswertung des gemessenen Magnetfeldes, wie z. B. durch eine zweite Auswerteschaltung, unter einem versetzten Winkel zur Behebung der Mehrdeutigkeit erforderliche Informationen liefern. Die Sensorelemente können beispielsweise in einem zweidimensionalen Array angeordnet sein, durch das in benachbarten, parallel zur Drehachse verlaufenden Spalten zwei unter einem versetzten Winkel angeordnete Maßstäbe definiert werden. Auf ähnliche Weise ist es möglich eine zweite, zu der in Fig. 1 gezeigten ersten Detektoranordnung durch Rotation um die Drehachse versetzte Detektoranordnung vorzusehen, die einen zweiten Ort auf einem zweiten Maßstab bestimmt, wobei die bestimmten beiden Orte zusammen den Drehwinkel auf dem gesamten Vollkreis eindeutig bestimmen.

Mit dem bezugnehmend auf die Fig. 1 bis 3a und 3b beschriebenen Drehwinkelsensor beträgt die erreichbare Genauigkeit durch Interpolation 12 Bit oder mehr bezogen auf einen Drehwinkelbereich von 180°. Die erfassten absoluten Winkelwerte werden digital zur Verfügung gestellt. Ein Vorteil des Systems besteht darin, dass die Orientierungswerte bzw. Winkelwerte sofort nach dem in Betrieb nehmen des Sensors verfügbar sind, und somit eine Drehung bis zu dem Erreichen einer besonders gekennzeichneten Stelle, wie dies bei dem im vorhergehenden beschriebenen berührungslosen Sensor des digitalen Typs mit Zahnrad mit fehlendem Zahn der Fall ist, nicht notwendig ist. Durch die Verwendung mehrerer Sensoren kann eine Genauigkeit erreicht werden, die sehr viel höher ist als die digitale Umsetzung eines einzelnen analogen Sensorsignals eines der Sensorelemente. Die Genauigkeit des Sensors kann durch eine Verringerung des Abstands der Sensorelemente erhöht werden, ohne dass eine elektronische Beschaltung, wie z. B. die Auflösung der Analog/Digital-Umsetzung, verändert werden muss, wodurch sich Vorteile bei der Herstellung bzw. einer Neu- oder Weiterentwicklung des Sensors ergeben. Zudem arbeitet der Sensor berührungslos und ist dadurch nicht dem mechanischen Verschleiß unterworfen. Dadurch, dass eine bestimmte Charakteristik des Gebermagneten, typischerweise der Nullfelddurchgang des Radialfeldes, verwendet wird, ist die Anordnung sehr unempfindlich gegen Veränderungen des absoluten Magnetfeldes oder der Empfindlichkeit der sensitiven Elemente, was im Rahmen der Temperaturveränderung nicht ganz vermieden werden kann.

Zudem kann der Auswerteteil und der Detektorteil zusammen in einen einzigen Chip integriert werden, wodurch insbesondere bei sehr großen Stückzahlen bei der Herstellung eine hoch optimierte Fertigung erzielt werden kann.

Eine exemplarische Anwendung für einen erfindungsgemäßen Drehwinkelsensor ist die Stellung einer Drosselklappe in einer Fluidrohrleitung. Der hier auftretende Winkelbereich überspannt 90°. Eine derzeitige Realisierung des erfindungsgemäßen Sensors lässt eine Auflösung von etwa 0,05 bis 0,1° erwarten.

Fig. 4 zeigt den Sensor von Fig. 1, wie er zur Erfassung der Stellung einer Drosselklappe in einer Rohrleitung verwendet wird. Fig. 4 zeigt eine Rohrleitung 200, eine Drosselklappe 210, die sich in einem Drehwinkelbereich von 0 bis 90° drehen kann, einen Drehwinkelsensor 220 wie derjenige von Fig. 1, eine Verstellungseinrichtung 230, die in Fig. 4 lediglich exemplarisch als ein Hebel dargestellt ist, sowie eine Drehachse 240, die den Gebermagneten des Sensors 220 fest mit der Drosselklappe 210 verbindet. Die in Fig. 4 gezeigte Stellung der Drosselklappe 210 entspricht einer geschlossenen Stellung, in der ein Gas- oder Flüssigkeitsfluss 250 in der Rohrleitung 200 gesperrt wird. Durch eine Verstellung der Drosselklappe 210 mittels der Verstellungseinrichtung 230, wie sie durch einen Doppelpfeil 260 veranschaulicht wird, kann die Drosselklappe um bis zu 90° gedreht werden, um den Fluidfluss 250 zu ermöglichen. Der Sensor 220 gibt über einen digitalen Bus 270 zur Datenübertragung an beispielsweise einen Computer oder eine sonstige Steuereinrichtung den aus der Lage des Nullfelddurchganges des Radialfeldes des durch den Gebermagneten erzeugten Magnetfeldes auf dem durch die Sensorelemente der Detektoreinheit definierten Maßstab bestimmten momentanen absoluten Drehwinkel ϕ in digitaler Form aus. Ohne weitere Analog/Digital-Umsetzung kann folglich der Absolutwinkelwert als digitaler Messwert über den Bus 270, wie z. B. ein CAN-Bus, an ein Motorsteuergerät (nicht gezeigt) weiter geleitet werden.

Ein exemplarischer Einsatz des in Fig. 4 gezeigten Drosselventils ist beispielsweise der Ansaugtrakt einer Verbrennungskraftmaschine, wobei dort Schwingungen und Vibrationen zum Tragen kommen, die bei potentiometrischen Lösungen bei einer festen Winkelstellung zu kleinen hochfrequenten Bewegungen führen würden, die ein kontaktbehaftet arbeitendes System schädigen. Die Lebenserwartung des Systems muss für den Automotiveinsatz jedoch 12 Jahre oder mehr betragen. Im Motorraum von Kraftfahrzeugen sind zudem hohe Anforderungen an den Temperaturbereich zu stellen. Widerstandsmessungen sind oftmals mit hohen Temperaturdriften behaftet, so dass die erreichbare Winkelgenauigkeit eingeschränkt wird. Außerdem ist in diesem Marktsegment der Preisdruck besonders hoch, wodurch die im vorhergehenden beschriebenen kostenintensiven berührungslosen Lösungen auch bei technischen Vorteilen ausgeschlossen sind.

Hier bietet der Einsatz eines erfindungsgemäßen Sensors, wie er bezugnehmend auf Fig.1 beschrieben wurde, einen enormen Vorteil. Durch Verwendung des erfindungsgemäßen Drehwinkelsensors wird zunächst eine Realisierung der Detektoranordnung ermöglicht, bei der die Sensorelemente zusammen mit einem Auswerteteil in einen einzigen Chip integriert sein können, der beispielsweise in CMOS-Standardtechnologie hergestellt sein kann. Hierdurch wird auch eine möglichst geringe Fläche ermöglicht. Für den Geber wird keine digitale Codierung der Winkelpositionen erfordert. Obwohl der Signalgeber etwas aufwändiger ist als für die magnetische Codierung von Sinus/Cosinus-Signal-Systemen, ist bei geringerem Messwertverarbeitungsaufwand ebenfalls eine hohe Genauigkeit zu erzielen. Zudem stehen die Orientierungsinformationen unmittelbar nach dem Einschalten des Drehwinkelsensors zur Verfügung und es ist nicht erforderlich, das Erreichen einer bestimmten signifikanten Stelle, wie z.B. ein Zahnrad mit fehlendem Zahn, abzuwarten,
bis die Berechnung des Drehwinkels bzw. die Orientierungsinformationen möglich ist. Zudem ist ein Einsatz für große Temperaturbereiche, wie sie bei Kraftmaschinen vorkommen, denkbar. Für einen Einsatz bei hohen Temperaturen können spezielle Substrate, wie z. B. SOI-Substrate (SOI = silicon on insulator), zur Herstellung des Detektorchips verwendet werden. Zudem weist das in Fig. 1 dargestellte Ausführungsbeispiel den Vorteil auf, dass lediglich geringe Temperaturdriften bei der Drehwinkelbestimmung auftreten, da die Änderung der Empfindlichkeit der Sensoren und des Magnetfeldes mit der Temperatur nicht direkt in die Messergebnisse eingehen.

Bezugnehmend auf das im vorhergehenden beschriebene spezielle Ausführungsbeispiel eines Drehwinkelsensors wird auf Folgendes hingewiesen. Obwohl im vorhergehenden eine spezielle Magnetgeberstruktur beschrieben worden ist, sind ferner andere Magnetstrukturen möglich. Es sind beispielsweise alle Magnetgeberstrukturen möglich, die für einen interessierenden Drehwinkelbereich eine spezielle Charakteristik des Magnetfeldes auf den durch die Sensorelemente definierten Maßstab abbilden, und bei denen der Ort, auf den die Charakteristik abgebildet wird, innerhalb des interessierenden Drehwinkelbereiches eindeutig von dem momentanen Drehwinkel abhängt.

Ferner wird darauf hingewiesen, dass, obwohl im vorhergehenden beschrieben worden ist, dass der Drehwinkel für alle auftretenden Drehwinkel aus dem Ort des Nulldurchgangs auf dem Maßstab eindeutig hervorgeht, es bei speziellen Anwendungen möglich sein kann, dass die Eindeutigkeit lediglich in einem Teilbereich erforderlich ist, während für den gesamten Bereich der vorkommenden Drehwinkel eine Mehrdeutigkeit nicht störend ist. Bei dem Anwendungsbeispiel von Fig. 4 gibt der von dem Drehwinkelsensor ausgegebene Absolutwinkelwert den Drehwinkel beispielsweise durch den Winkel an, den die Magnetisierungsrichtung mit einer radialen Verbindungsgeraden zwischen Detektoranordnung und Drehachse einschließt, wobei 0° der offenen Stellung entspricht. Wenn nun die Drosselklappe über den Bereich von 0° bis 90° hinaus auch auf dem ganzen Vollkreis drehbar ist, kann bei diesem Anwendungsfall die Zweideutigkeit einer Winkelmessung geduldet werden, da es aufgrund der Symmetrie der Anordnung von Fig. 4 für den Fluidfluss unerheblich ist, ob sich die Drosselklappe in einer Drehwinkelstellung von 30° oder 330° befindet.

In Bezug auf die Detektoranordnung wird darauf hingewiesen, dass die Sensorelemente auch in einem zweidimensionalen Array angeordnet sein können. In dem Fall einer linearen Anordnung der Sensorelemente ist es ferner nicht erforderlich, dass die Sensorelemente parallel zu der Drehachse ausgerichtet sind. Obwohl eine Anordnung der Sensorelemente auf einer gemeinsamen Ebene bevorzugt wird, ist es ferner möglich, dass die Sensorelemente entlang einer gekrümmten Linie angeordnet sind, wodurch ein gekrümmter Maßstab definiert wird. In dem Fall einer flächigen Anordnung der Sensorelemente entspricht der durch die Sensorelemente definierte Maßstab einer gekrümmten oder planaren Fläche.

Es wird ferner darauf hingewiesen, dass, obwohl im vorhergehenden beschrieben worden ist, dass die Auswertung der Messwerte der magnetfeldempfindlichen Sensorelemente in einer Auswerteschaltung durchgeführt wird, die wie die Sensorelemente in denselben fest integriert ist, es ferner möglich ist, dass die Daten woanders, wie z. B. in einem Computer, einer ASIC oder einem PLA, durch Software, Firmware oder Hardware ausgewertet werden, in welchem Fall die Messwerte in analoger Form beispielsweise mittels eines Flachbandkabels oder einer gedruckten Leiterplatine ausgegeben werden.

Anstatt des im vorhergehenden verwendeten Nulldurchgangs der radialen Komponente des Magnetfeldes kann als Charakteristik desselben ferner ein relatives Maximum, ein relatives Minimum usw. des Magnetfeldes, und zwar in jeder beliebigen Richtung oder aber betragsmäßig, verwendet werden.

Ferner kann auf den Drehwinkel entgegen der vorhergehenden Beschreibung direkt aus den Ausgangssignalen rückgeschlossen werden, ohne zuerst den Ort der Magnetfeldcharakteristik aus dem Maßstab zu bestimmen, wie z. B. durch Mustererkennung bezüglich der Ausgangssignale der Sensorelemente. Hierbei dient die Charakteristik des Magnetfeldes entlang des Maßstabs lediglich zur besseren Differenzierung der verschiedenen Ausgangssignalkombinationen bei den verschiedenen Drehwinkeln.

## Patentansprüche

1. Vorrichtung zum Erfassen eines Drehwinkels einer Drehung um eine Drehachse (30), mit
einem Gebermagnet (20) zum Erzeugen eines Magnetfeldes;
einer Mehrzahl von magnetfeldempfindlichen Sensorelementen (60) zum Erfassen des Magnetfeldes, wobei der Gebermagnet (20) und die Mehrzahl von magnetfeldempfindlichen Sensorelementen (60) derart angeordnet sind, dass bei Drehung um die Drehachse die Mehrzahl von magnetfeldempfindlichen Sensorelementen (60) relativ zu dem Gebermagnet (20) um denselben kreist, und wobei durch die Mehrzahl von magnetfeldempfindlichen Sensorelementen (60) ein Maßstab definiert wird,
wobei der Gebermagnet (20) derart angeordnet ist, dass das erzeugte Magnetfeld an einem Ort auf dem Maßstab eine Charakteristik aufweist, und der Ort auf dem Maßstab zumindest für einen Teilbereich einer vollen Drehung in eindeutiger Weise von dem Drehwinkel abhängt, und wobei der Gebermagnet (20) schräg zur Drehachse (30) magnetisiert ist.

2. Vorrichtung gemäß Anspruch 1, bei der der Gebermagnet (20) fest an der Drehachse (30) angebracht ist, und die Mehrzahl von magnetfeldempfindlichen Sensorelementen ortsfest angeordnet ist, so dass sich der Gebermagnet (20) bei einer Drehung um die Drehachse (30) relativ zu der Mehrzahl von magnetfeldempfindlichen Sensorelementen (60) dreht.

3. Vorrichtung gemäß Anspruch 1 oder 2, bei der der Gebermagnet (20) zylindrisch geformt und entlang der Flächendiagonalen magnetisiert ist, wobei die Symmetrieachse des Gebermagneten (20) mit der Drehachse (30) übereinstimmt.

4. Vorrichtung gemäß Anspruch 3, bei der die Höhe und der Durchmesser des Gebermagneten (20) im wesentlichen gleich groß sind.

5. Vorrichtung gemäß einem der vorhergehenden Ansprüche, bei der ein Drehwinkelbereich, innerhalb dessen der Ort in eindeutiger Weise von dem Drehwinkel abhängt, 180° überspannt.

6. Vorrichtung gemäß einem der vorhergehenden Ansprüche, die ferner folgende Merkmale aufweist:
eine Einrichtung zum Erzeugen eines Signals, das einen Drehwinkelteilbereich einer Mehrzahl von Drehwinkelteilbereichen angibt, in dem sich der Drehwinkel der Drehung befindet; und
eine Einrichtung zum Empfangen des den Drehwinkelteilbereich angebenden Signals,
wobei die Drehwinkelteilbereiche zusammen einen Drehwinkelbereich von 360° überspannen, und wobei eine Kombination aus dem Ort auf dem Maßstab und dem den Drehwinkelteilbereich angebenden Signal in eindeutiger Weise von dem Drehwinkel abhängt.

7. Vorrichtung gemäß einem der Ansprüche 1 bis 5, bei der ein Drehwinkelbereich, für die der Ort in eindeutiger Weise von dem Drehwinkel abhängt, 360° überspannt, und der ferner folgendes Merkmal aufweist:
eine zweite Mehrzahl von magnetfeldempfindlichen Sensorelementen, die durch Rotation um die Drehachse (30) relativ von der ersten Mehrzahl von magnetfeldempfindlichen Sensorelementen versetzt ist, wobei das erzeugte Magnetfeld an einem zweiten Ort auf einem durch die zweite Mehrzahl von magnetfeldempfindlichen Sensorelementen definierten Maßstab die Charakteristik aufweist, und wobei die Kombination des Orts auf dem ersten Maßstab und des Orts auf dem zweiten Maßstab in eindeutiger Weise von dem Drehwinkel abhängt.

8. Vorrichtung gemäß einem der vorhergehenden Ansprüche, bei der die Sensorelemente (60) auf einer zu der Drehachse (30) beabstandeten und zu derselben parallelen Ebene angeordnet sind.

9. Vorrichtung gemäß einem der vorhergehenden Ansprüche, bei der die Mehrzahl von magnetfeldempfindlichen Sensorelementen (60) in Form eines zweidimensionalen oder eindimensionalen Arrays angeordnet sind.

10. Vorrichtung gemäß einem der vorhergehenden Ansprüche, bei der die Mehrzahl von magnetfeldempfindlichen Sensorelementen (60) in einem Chip integrierte Hallsensoren sind.

11. Vorrichtung gemäß einem der vorhergehenden Ansprüche, bei der die Mehrzahl von magnetfeldempfindlichen Sensorelementen (60) linear und parallel zur Drehachse (30) angeordnet ist.

12. Vorrichtung gemäß einem der vorhergehenden Ansprüche, bei der die Charakteristik aus einer Gruppe ausgewählt ist, die einen Nulldurchgang, ein relatives Minimum und ein relatives Maximum einer Komponente des Magnetfeldes in einer vorbestimmten Richtung und/oder des Betrags des Magnetfeldes umfasst.

13. Vorrichtung gemäß einem der vorhergehenden Ansprüche, bei der die Charakteristik der Nulldurchgang der radialen Komponente des Magnetfeldes ist, und die Mehrzahl von magnetfeldempfindlichen Sensorelementen (60) angeordnet ist, um die radiale Komponente des Magnetfeldes zu erfassen.

14. Vorrichtung gemäß einem der vorhergehenden Ansprüche, die ferner folgendes Merkmal aufweist:
eine Einrichtung (100) zum Rückschließen auf den Drehwinkel aus dem von den magnetfeldempfindlichen Sensorelementen (60) erfassten Magnetfeld.

15. Vorrichtung gemäß Anspruch 14, bei der die Einrichtung zum Rückschließen folgendes Merkmal aufweist:
eine Einrichtung (100) zum Bestimmen des Ortes auf dem Maßstab aus dem durch die Mehrzahl von den magnetfeldempfindlichen Sensorelementen (60) erfassten Magnetfeld und zum Rückschließen auf den Drehwinkel aus dem bestimmten Ort.

16. Vorrichtung gemäß Anspruch 15, bei der die Einrichtung (100) zum Bestimmen und Rückschließen eine Einrichtung zum Interpolieren des durch die Mehrzahl von magnetfeldempfindlichen Sensorelementen (60) erfassten Magnetfeldes, um den Ort auf dem Maßstab zu bestimmen, aufweist.

## Claims

1. An apparatus for detecting a rotation angle of a rotation around an axis of rotation (30), comprising:
a transducer magnet (20) for generating a magnetic field;
a plurality of magnetic-field-sensitive sensor elements (60) for detecting the magnetic field, with the transducer magnet (20) and the plurality of magnetic-field-sensitive sensor elements (60) being arranged such that, when rotating around the axis of rotation, the plurality of magnetic-field-sensitive sensor elements (60) circles around the same relative to the transducer magnet (20), and wherein the plurality of magnetic-field-sensitive sensor elements (60) define a scale,
with the transducer magnet (20) being arranged such that the generated magnetic field comprises a characteristic at a locus on the scale, and the locus on the scale uniquely depends on the rotary angle at least for a partial area of a full rotation, wherein the transducer magnet (20) is magnetized inclined to the axis of rotation (30).

2. The apparatus in accordance with claim 1, wherein the transducer magnet (20) is fixedly arranged to the axis of rotation (30), and the plurality of magnetic-field-sensitive sensor elements is fixedly arranged such that the transducer magnet (20), when rotating around the axis of rotation (30), rotates relative to the plurality of magnetic-field-sensitive sensor elements (60).

3. The apparatus in accordance with claim 1 or 2, wherein the transducer magnet (20) comprises a cylindrical shape and is magnetized along the surface diagonal, with the symmetry axis of the transducer magnet (20) matching with the axis of rotation (30).

4. The apparatus in accordance with claim 3, wherein the height and the diameter of the transducer magnet (20) are essentially of the same size.

5. The apparatus in accordance with one of the preceding claims, wherein a rotation angle area, within which the locus uniquely depends on the rotation angle, spans 180°.

6. The apparatus in accordance with one of the preceding claims, further comprising:
means for generating a signal indicating a rotation angle partial area of a plurality of rotation angle partial areas, in which the rotation angle of the rotation is located; and
means for receiving the signal indicating the rotation angle partial area,
with the rotation angle partial areas together spanning a rotation angle area of 360°, and wherein a combination of the locus on the scale and the signal indicating the rotation angle partial area uniquely depends on the rotation angle.

7. The apparatus in accordance with one of claims 1 to 5, wherein a rotation angle area, for which the locus uniquely depends on the rotation angle, spans 360°, the apparatus further comprising:
a second plurality of magnetic-field-sensitive sensor elements offset by rotation around the axis of rotation (30) relative to the first plurality of magnetic-field-sensitive sensor elements, with the generated magnetic field on a second locus on a scale defined by the second plurality of magnetic-field-sensitive sensor elements comprises the characteristic, and wherein the combination of the locus on the first scale and the locus on the second scale being uniquely dependent on the rotation angle.

8. The apparatus in accordance with one of the preceding claims, wherein the sensor elements (60) are arranged on a level spaced from the axis of rotation (30) and which is arranged in parallel to the same.

9. The apparatus in accordance with one of the preceding claims, wherein the plurality of magnetic-field-sensitive sensor elements (60) are arranged in the form of a two-dimensional or one-dimensional array.

10. The apparatus in accordance with one of the preceding claims, wherein the plurality of magnetic-field-sensitive sensor elements (60) are Hall sensors integrated within a die.

11. The apparatus in accordance with one of the preceding claims, wherein the plurality of magnetic-field-sensitive sensor elements (60) are arranged linearly and in parallel to the axis of rotation (30).

12. The apparatus in accordance with one of the preceding claims, wherein the characteristic is selected from a group including a zero crossing, a relative minimum and a relative maximum of a component of the magnetic field in a predetermined direction and/or of the magnitude of the magnetic-field.

13. The apparatus in accordance with one of the preceding claims, wherein the characteristic is the zero crossing of the radial component of the magnetic field, and the plurality of magnetic-field-sensitive sensor elements (60) is arranged to detect the radial component of the magnetic field.

14. The apparatus in accordance with one of the preceding claims, further comprising:
means (100) for inferring the rotation angle from the magnetic field detected by the magnetic-field-sensitive sensor elements (60).

15. The apparatus in accordance with claim 14, wherein the means for inferring comprises the following:
means (100) for determining the locus on the scale from the magnetic field detected by the plurality of magnetic-field-sensitive sensor elements (60) and for inferring the rotation angle from the determined locus.

16. The apparatus in accordance with claim 15, wherein the means (100) for determining and inferring comprises a means for interpolating the magnetic field detected by the plurality of magnetic-field-sensitive sensor elements (60), so as to determine the locus on the scale.

## Revendications

1. Dispositif pour capter un angle de rotation autour d'un axe de rotation (30), avec
un aimant de capteur (20) destiné à générer un champ magnétique ;
une pluralité d'éléments capteurs sensibles à un champ magnétique (60) destinés à capter le champ magnétique, l'aimant de capteur (20) et la pluralité d'éléments capteurs sensibles à un champ magnétique (60) étant disposés de telle sorte que, lors de la rotation autour de l'axe de la rotation, la pluralité d'éléments capteurs sensibles à un champ magnétique (60) tournent, par rapport à l'aimant de capteur (20), autour de ce dernier et par la pluralité d'éléments capteurs sensibles à un champ magnétique (60) étant définie une échelle,
l'aimant de capteur (20) étant disposé de telle sorte que le champ magnétique généré présente, en un point sur l'échelle, une caractéristique, et le point sur l'échelle dépendant, au moins pour une plage partielle d'une rotation complète, de manière univoque de l'angle de rotation, et l'aimant de capteur (20) étant aimanté obliquement par rapport à l'axe de rotation (30).

2. Dispositif selon la revendication 1, dans lequel l'aimant de capteur (20) est placé fixe sur l'axe de rotation (30), et la pluralité d'éléments capteurs sensibles à un champ magnétique sont disposés stationnaires, de sorte que l'aimant de capteur (20) tourne, lors d'une rotation autour de l'axe de rotation (30), par rapport à la pluralité d'éléments capteurs sensibles à un champ magnétique (60).

3. Dispositif selon la revendication 1 ou 2, dans lequel l'aimant de capteur (20) est réalisé de forme cylindrique et aimanté le long des diagonales des faces, l'axe de symétrie de l'aimant de capteur (20) coïncidant avec l'axe de rotation (30).

4. Dispositif selon la revendication 3, dans lequel la hauteur et le diamètre de l'aimant de capteur (20) sont sensiblement de même grandeur.

5. Dispositif selon l'une des revendications précédentes, dans lequel une plage d'angle de rotation dans laquelle le point dépend de manière univoque de l'angle de rotation, couvre 180°.

6. Dispositif selon l'une des revendications précédentes, présentant, par ailleurs, les caractéristiques suivantes :
un dispositif destiné à générer un signal qui indique une plage partielle d'angle de rotation parmi une pluralité de plages partielles d'angle de rotation dans laquelle se situe l'angle de rotation de la rotation ;
et un dispositif destiné à recevoir le signal indiquant la plage partielle d'angle de rotation,
les plages partielles d'angle de rotation couvrant, ensemble, une plage d'angle de rotation de 360°, et une combinaison du point sur l'échelle et du signal indiquant la plage partielle d'angle de rotation dépendant de manière univoque de l'angle de rotation.

7. Dispositif selon l'une des revendications 1 à 5, dans lequel une plage d'angle de rotation pour laquelle le point dépend de manière univoque de l'angle de rotation couvre 360°, et présentant, par ailleurs, la caractéristique suivante :
une deuxième pluralité d'éléments capteurs sensibles à un champ magnétique déplacé, par rotation autour de l'axe de rotation (30), par rapport à la première pluralité d'éléments capteurs sensibles à un champ magnétique, le champ magnétique généré en un deuxième point sur l'échelle définie par la deuxième pluralité d'éléments capteurs sensibles à un champ magnétique présentant la caractéristique, et la combinaison du point sur la première échelle et du point sur la deuxième échelle dépendant de manière univoque de l'angle de rotation.

8. Dispositif selon l'une des revendications précédentes, dans lequel les éléments capteurs (60) sont disposés dans un plan distant de l'axe de la rotation (30) et parallèle à ce dernier.

9. Dispositif selon l'une des revendications précédentes, dans lequel la pluralité d'éléments capteurs sensibles à un champ magnétique (60) sont disposés sous forme d'une rangée bidimensionnelle ou unidimensionnelle.

10. Dispositif selon l'une des revendications précédentes, dans lequel la pluralité d'éléments capteurs sensibles à un champ magnétique (60) sont des capteurs de Hall intégrés dans une puce.

11. Dispositif selon l'une des revendications précédentes, dans lequel la pluralité d'éléments capteurs sensibles à un champ magnétique (60) sont disposés linéaires et parallèles à l'axe de rotation (30).

12. Dispositif selon l'une des revendications précédentes, dans lequel la caractéristique est choisie parmi un groupe comprenant un passage à zéro, un minimum relatif et un maximum relatif d'une composante du champ magnétique dans une direction prédéterminée et/ou de la valeur du champ magnétique.

13. Dispositif selon l'une des revendications précédentes, dans lequel la caractéristique est le passage à zéro de la composante radiale du champ magnétique, et la pluralité d'éléments capteurs sensibles à un champ magnétique (60) sont disposés de manière à capter la composante radiale du champ magnétique.

14. Dispositif selon l'une des revendications précédentes, présentant, par ailleurs, la caractéristique suivante :
un dispositif (100) destiné à dériver l'angle de rotation du champ magnétique capté par les éléments capteurs sensibles à un champ magnétique (60).

15. Dispositif selon la revendication 14, dans lequel le dispositif pour dériver présente la caractéristique suivante :
un dispositif (100) destiné à déterminer le point sur l'échelle à partir du champ magnétique capté par la pluralité d'éléments capteurs sensibles à un champ magnétique (60) et à dériver l'angle de rotation à partir du point déterminé.

16. Dispositif selon la revendication 15, dans lequel le dispositif (100) pour déterminer et déduire présente un dispositif destiné à interpoler le champ magnétique capté par la pluralité d'éléments capteurs sensibles à un champ magnétique (60), afin de déterminer le point sur l'échelle.
